# EUROPÄISCHE PATENTANMELDUNG

(11) **EP 1 051 925 A1**
(43) Veröffentlichungstag der Anmeldung: **15.11.2000**
(21) Anmeldenummer: 99109545.6
(22) Anmeldetag: 12.05.1999
(51) Int. Cl.: A43D 1/02, A43D 1/04, H04N 7/18

(54) **Vorrichtung zur Bestimmung eines bestpassenden Schuhs**

(71) Anmelder: Tecmath GmbH & Co. KG, 67661 Kaiserslautern (DE)
(72) Erfinder: Seidl, Andreas, D-67685 Weilerbach (DE); Stöhr, Michael, D-67731 Otterbach (DE); Trieb, Rainer, D-67685 Weilerbach (DE)
(74) Vertreter: Wagner, Karl H., Dipl.-Ing.

(57) **Zusammenfassung**

Die Erfindung betrifft eine Vorrichtung zur Bestimmung einer einen bestpassenden Schuh liefernden Schuhgröße für einen Fuß, wobei folgendes vorgesehen ist: eine Abtasteinrichtung zur dreidimensionalen, vorzugsweise berührungslosen Abtastung des Fußes und zur Lieferung von Fußoberflächenabtastdaten, welche die Fußoberfläche dreidimensional darstellen, ein mit der Abtasteinrichtung verbundener Speicher zur Speicherung der Fußoberflächenabtastdaten, eine Speichereinrichtung zur Speicherung einer Tabelle, die die Schuhgrößen und die dazugehörigen Fußmaße enthält, einen Computer, der folgendes besitzt: i) einen Prozessor, der basierend auf den Fußoberflächenabtastdaten Fußmaße automatisch bestimmt und den Fußmaßen entsprechende Fußmaßdaten in einem Fußmaßdatenspeicher abspeichert, und ii) eine Vergleichsvorrichtung zum Vergleichen der Fußmaßdaten mit den gespeicherten Schuhgrößentabellen zur Bestimmung der Schuhgröße.

## Beschreibung

Die vorliegende Erfindung bezieht sich auf eine Vorrichtung zur automatischen oder interaktiven dreidimensionalen Vermessung des Fußes und die optimale Auswahl von Schuhen nach kundenindividuellen Merkmalen.

Beim Kauf eines Paars von Schuhen sieht sich der Kunde häufig mit einer großen Anzahl von unterschiedlichen Schuhmodellen unterschiedlicher Größe konfrontiert. Die Auswahl eines passenden und den Geschmack des Kunden befriedigenden Schuhs ist zeitraubend sowohl für den Kunden wie auch für das Verkaufspersonal, das zahlreiche Schuhkartons mit Schuhen unterschiedlicher Größe oder auch unterschiedlichen Schuhmodellen herbeiholen muß.

Der Erfindung liegt die Aufgabe zugrunde, eine Vorrichtung vorzusehen, die die Auswahl vereinfacht und auch erweitert. Ferner soll eine Vorrichtung angegeben werden, mittels derer abhängig von einem Fuß ein weitgehend optimaler Schuh hergestellt werden kann.

Zur Lösung der Aufgabe sieht die Erfindung eine Vorrichtung vor, bei der eine Abtasteinrichtung zur dreidimensionalen, vorzugsweise berührungslosen Abtastung des Fußes vorgesehen ist und die Fußoberfläche dreidimensional darstellende Fußoberflächenabtastdaten liefert. Ein mit der Abtasteinrichtung verbindbarer Speicher ist zur Speicherung der Fußoberfächenabtastdaten vorgesehen. Ferner sind in einer Speichervorrichtung die verschiedenen Schuhgrößen definierenden Fußmaßdaten angegeben, wobei durch eine Vergleichsvorrichtung zum Vergleich der aktuellen Fußmaßdaten mit den gespeicherten die Schuhgröße definierenden Fußmaßdaten die optimale Schuhgröße bestimmt wird.

Femer wird eine Vorrichtung vorgesehen, die eine Abtasteinrichtung aufweist zur dreidimensionalen, vorzugsweise berührungslosen Abtastung des Fußes und zur Lieferung von Fußoberflächenabtastdaten, die die Fußoberfäche dreidimensional darstellen. Mit der Abtasteinrichtung ist ein Speicher zur Speicherung der Fußoberflächenabtastdaten vorgesehen. Femer ist eine Speichereinrichtung vorgesehen zur Speicherung relevanter Leistenmaße von verschiedenen Leisten. Die Vorrichtung weist ferner einen Computer auf, der einen Prozessor besitzt, welcher basierend auf den Fußoberflächenabtastdaten Fußmaße automatisch bestimmt und den Fußmaßen entsprechende Fußmaßdaten in einem Fußmaßdatenspeicher abspeichert. Eine Vergleichsvorrichtung vergleicht die Fußmaßdaten mit den Leistenmaßdaten, um so den Leisten zu bestimmen, der einen bestpassenden Schuh liefert. Bevorzugte Ausgestaltungen der Erfindung ergeben sich aus den Unteransprüchen.

Weitere Vorteile, Ziele und Einzelheiten der Erfindung ergeben sich aus der Beschreibung von Ausführungsbeispielen anhand der Zeichnung; in der Zeichnung zeigt:

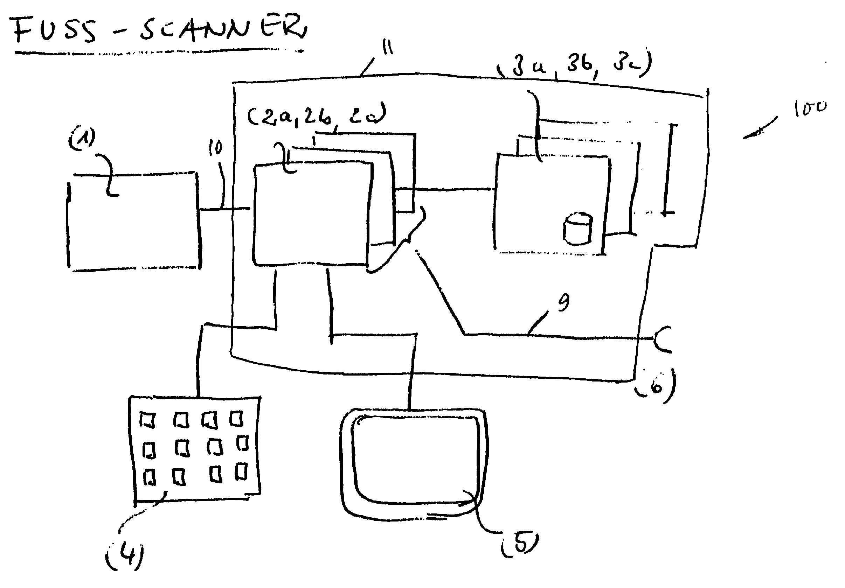

- Fig. 1: ein Ausführungsbeispiel der erfindungsgemäßen Vorrichtung zur Bestimmung eines bestpassenden Schuhs bzw. einer passenden Schuhgröße.

Figur 1 zeigt eine Vorrichtung 100 zur Bestimmung eines bestpassenden Schuhs bzw. einer passenden Schuhgröße. Die Vorrichtung 100 kann beispielsweise in einem Schuhgeschäft stehen und über eine Leitung 9 mit einem öffentlichen Telefonnetz verbunden sein, beispielsweise um ans Internet angeschlossen zu werden.

Eine Abtastvorrichtung 1 sieht eine vorzugsweise berührungslose Abtastung eines menschlichen Fußes vor und liefert auf Leitung 10 digitalisierte Fußabtastdaten an einen Computer 11. Der Computer 11 umfaßt eine nicht dargestellte Recheneinheit sowie Prozessoren 2a, 2b und 2c und ferner Speichereinrichtungen 3a, 3b und 3c. Die auf Leitung 10 dem Computer 11 zugeführten digitalisierten Fußmeßdaten gelangen zu einem koordinierenden Prozessor 2a, der automatisch oder interaktiv Fußmaße entsprechend den zugeführten digitalen Daten ermittelt. Diese Fußmaße werden in der Form von Fußmaßdaten in der Speichereinrichtung 3a abgespeichert.

Ein weiterer koordinierender Prozessor 2b dient zur automatischen Ermittlung der Schuhgröße auf der Basis der Fußmaßdaten oder ordnet den passenden Leisten durch Vergleich von Fußmaßdaten mit den in der Speichereinrichtung 3b gespeicherten Leistenmaßdaten zu.

Ein koordinierender Prozessor 2c dient schließlich zur Auswahl des Schuhmodells auf der Basis der Schuhgröße oder der ermittelten Leisten.

Ferner ist im Computer oder gesondert davon eine Speichereinrichtung 3a vorgesehen, welche dazu dient, alle relevanten Kundendaten, wie z. B. die Fußmaße des Kunden, persönliche Daten des Kunden und produktspezifische Daten zur Ausstattung eines Schuhmodells, zu speichern. Diese kundenspezifischen Daten können durch eine Eingabevorrichtung, beispielsweise eine Tastatur 4, eingegeben werden.

Ferner dient, wie bereits erwähnt, die Speichereinrichtung 3b für die Speicherung aller relevanten Leistendaten, wie z. B. der Oberfläche des Leisten, der Leistenmaße. Eine Speichereinrichtung 3c dient schließlich zur Speicherung aller relevanten Schuhmodelle und Schuhgrößen auf der Basis der üblichen Größensysteme zusammen mit ggf. einer Information über den Leisten, auf dem das Schuhmodell gefertigt wurde.

Durch die Eingabevorrichtung 4 können nicht nur eigene Daten durch den Kunden oder Händler eingegeben werden, z. B. die Stammdaten des Kunden, Leistendaten, Schuhmodelldaten des Händlers, verfügbare Lagerware, es können auch weitere Daten eingegeben werden, z. B. Bilder der Schuhmodelle, Preisinformationen, etc.

Femer ist an den Computer 11 und speziell an den Prozessor 2a eine Vorrichtung, beispielsweise ein Bildschirm 5 zur multimedialen Präsentation der Kundendaten oder der aus der Speichereinrichtung ausgewählten Schuh- oder Leistendaten vorgesehen.

Durch den Anschluß 6 des Computers beispielsweise ans Internet kann es dem Kunden, dem Händler und dem Hersteller erlaubt werden, von einem beliebigen Standort aus auf die Daten des Beratungs- und Verkaufsautomaten zuzugreifen, die bereits verfügbaren Daten nutzen oder sie zu verändern (Internet, Netzwerk).

Es sei bemerkt, daß die Speichereinrichtung 3a-3c die Produktdaten z. B. als Satz von vorgegebenen Größen oder als auf die Kundendaten skalierbare Modelle des Produkts enthalten kann. Die Speichereinrichtung kann ferner ein Abbild der direkt verfügbaren Lagerware beim Händler sowie einen Katalog der beim Hersteller bestellbaren Produkte enthalten.

Die erfindungsgemäße Vorrichtung kann zusätzlich eine Vorrichtung aufweisen zur skalierbaren Darstellung und Ausgabe der Kundendaten bzw. der ausgewählten Produktdaten (z. B. Drucker, Kundenkarte). Ferner kann die erfindungsgemäß Vorrichtung direkt mit dem Hersteller zum Zwecke der Übertragung von Auftragsdaten und/oder der Produktionsverfügbarkeit verbunden sein.

Mit Hilfe des koordinierenden Prozessors kann der Kunde zusätzlich ermitteln, ob das Produkt seiner Wahl direkt beim Händler ab Lager verfügbar ist. Die gespeicherten Kundendaten können mit Hilfe statistischer Methoden z. B. für die Lagerverwaltung und die Auftragserteilung weiter verwendet werden.

## Patentansprüche

1. Vorrichtung zur Bestimmung einer einen bestpassenden Schuh liefernden Schuhgröße für einen Fuß, wobei folgendes vorgesehen ist:
a) eine Abtasteinrichtung zur dreidimensionalen, vorzugsweise berührungslosen Abtastung des Fußes und zur Lieferung von Fußoberflächenabtastdaten, welche die Fußoberfläche dreidimensional darstellen,
b) ein mit der Abtasteinrichtung verbundener Speicher zur Speicherung der Fußoberflächenabtastdaten,
c) eine Speichereinrichtung zur Speicherung einer Tabelle, die die Schuhgrößen und die dazugehörigen Fußmaße enthält,
d) einen Computer, der folgendes besitzt:
i) einen Prozessor, der basierend auf den Fußoberflächenabtastdaten Fußmaße automatisch bestimmt und den Fußmaßen entsprechende Fußmaßdaten in einem Fußmaßdatenspeicher abspeichert, und
ii) eine Vergleichsvorrichtung zum Vergleichen der Fußmaßdaten mit den gespeicherten Schuhgrößentabellen zur Bestimmung der Schuhgröße.

2. Vorrichtung zur Bestimmung eines einen bestpassenden Schuh liefernden Leistens für einen Fuß, wobei folgendes vorgesehen ist:
a) eine Abtasteinrichtung zur dreidimensionalen, vorzugsweise berührungslosen Abtastung des Fußes und zur Lieferung von Fußoberflächenabtastdaten, die die Fußoberfläche dreidimensional darstellen,
b) ein mit der Abtasteinrichtung verbundener Speicher zur Speicherung der Fußoberflächenabtastdaten,
c) eine Speichereinrichtung zur Speicherung relevanter Leistenmaße von verschiedenen Leisten in Form von Leistenmaßdaten, und
d) einen Computer, der folgendes aufweist:
i) einen Prozessor, der basierend auf den Fußoberflächenabtastdaten Fußmaße automatisch bestimmt und den Fußmaßen entsprechende Fußmaßdaten in einem Fußmaßdatenspeicher abspeichert; und
ii) eine Vergleichsvorrichtung zum Vergleich der Fußmeßdaten mit den Leistenmeßdaten zur Bestimmung des Leistens, der einen bestpassenden Schuh liefert.

3. Vorrichtung nach Anspruch 1 oder 2, wobei eine Speichereinrichtung zur Speicherung der Information über die für einen bestimmten Leisten hergestellten Schuhmodelle abgespeichert ist.

4. Vorrichtung nach einem der vorhergehenden Ansprüche, dadurch gekennzeichnet, daß ein Speicher vorgesehen ist für die Bild/Text/Ton, d. h. die multimediale Darstellung und zwar zur Lieferung von Daten zur Darstellung der verfügbaren Schuhmodelle für jeden Leisten, wobei angegeben wird, ob das Schuhmodell am Lager ist oder bestellt werden kann.

5. Vorrichtung nach einem oder mehreren der vorhergehenden Ansprüche, dadurch gekennzeichnet, daß die Daten in den Datenspeicher wie folgt eingegeben werden:
a) durch einen Datenträger,
b) durch das Internet oder eine Netzwerkverbindung,
c) durch eine das gewünschte Bild, z. B. Schuhmodelle, aufnehmende Digitalkamera,
d) über eine Tastatur.

6. Vorrichtung nach einem oder mehreren der vorhergehenden Ansprüche, dadurch gekennzeichnet, daß die Vorrichtung mit dem öffentlichen Telefonnetz verbunden ist, so daß Daten von der Vorrichtung abgefragt und zur Vorrichtung geschickt werden können.
